(19) Europäisches Patentamt
European Patent Office
Office européen des brevets

(11) Publication number: 0 241 278 B1

(12) # EUROPEAN PATENT SPECIFICATION

(45) Date of publication of patent specification: 21.11.91 Bulletin 91/47

(51) Int. Cl.$^5$: C01G 35/00, C01G 33/00

(21) Application number: 87303052.2

(22) Date of filing: 08.04.87

(54) **Method of separating and purifying tantalum and niobium-containing compounds.**

(30) Priority: 10.04.86 JP 82487/86

(43) Date of publication of application: 14.10.87 Bulletin 87/42

(45) Publication of the grant of the patent: 21.11.91 Bulletin 91/47

(84) Designated Contracting States: BE DE FR GB IT NL

(56) References cited:
EP-A- 0 034 348
EP-A- 0 185 550
DE-B- 1 018 039
FR-A- 2 132 127
US-A- 3 112 991

(73) Proprietor: SUMITOMO CHEMICAL COMPANY, LIMITED
Kitahama 4-chome 5-33
Chuo-ku Osaka 541 (JP)

(72) Inventor: Niwa, Kenji
6-4-16, Maeharahigashi
Funabashi-shi Chiba (JP)
Inventor: Ichikawa, Ichiro
1353-4, Shiizu
Ichihara-shi Chiba (JP)
Inventor: Motone, Masaharu
328, Kashiwate-cho
Kanbara-shi Nara (JP)

(74) Representative: Diamond, Bryan Clive et al
Gee & Co., Chancery House, Chancery Lane
London WC2A 1QU (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Jouve, 18, rue Saint-Denis, 75001 PARIS

## Description

This invention relates to a method of separating a crude compound containing tantalum and niobium into a high-purity tantalum compound and a high-purity niobium compound. More particularly, it relates to a method of obtaining high-purity tantalum pentoxide and high-purity niobium pentoxide.

High-purity tantalum pentoxide and high-purity niobium pentoxide have recently been noted as materials for surface acoustic wave filters, pyroelectric infrared sensors, optoelectronic devices, VLSI devices, and optical devices. In any of these applications, the materials to be used are required to have high purity. For examble, from the standpoint of yield and performance attained, tantalum pentoxide for use in surface acoustic wave filters and pyroelectric infrared sensors should not contain iron, silicon, aluminum or niobium, and niobium pentoxide for the same applications should not contain iron, silicon, aluminum or tantalum. For applications in optical glass and optoelectronic devices, e.g., optical switches and optical waveguides, etc., high-purity materials containing no transition metals, e.g., iron, chromium, nickel, etc., that cause light absorption loss are required. In case of applying tantalum pentoxide to capacitors in a VLSI device, there is a strong demand to develop a material free from alkali metal impurities, e.g., sodium, potassium, etc., which impair performances of the device.

These requirements are barely met by the conventional purity of two to three nines (99 to 99.9%), and it has been strictly demanded to attain purities of the order of four to six nines (99.99 to 99.9999%).

Conventional methods for obtaining tantalum and niobium from crude materials containing tantalum, niobium and impurities, e.g., iron, manganese, silicon, aluminum, etc. include distillation and solvent extraction.

The distillation technique comprises mixing a crude material, e.g., an ore, with carbon, etc., passing chlorine gas therein at a temperature of about 600 to 800°C to effect chlorination, and isolating and purifying tantalum and niobium, taking advantage of the difference in boiling point between tantalum chloride and niobium chloride, as described in German Patents 1,017,601 and 1,056,105. However, the difference in boiling point between tantalum chloride (239°C) and niobium chloride (249°C) is about 10°C, which is so small for industrial purposes that considerable difficulty is involved in temperature control during fractional distillation. Further, if any chloride having a boiling point close to that of tantalum chloride or niobium chloride is present, it is substantially impossible to separate these chlorides, and thus failing to obtain high-purity tantalum pentoxide or niobium pentoxide.

The solvent extraction technique comprises dissolving a crude material containing tantalum and niobium, e.g., ores, in an acid containing hydrofluoric acid, contacting the resulting acidic solution with an organic solvent comprising an aliphatic ketone such as methyl ethyl ketone, cyclohexanone, methyl isobutyl ketone, etc. to thereby extract tantalum and niobium into the organic solvent, contacting the organic solvent extract with a concentrated sulfuric acid aqueous solution having a concentration of about 10 N to remove impurities that have been extracted concomitantly, e.g., iron, manganese, etc., and then contacting the organic solvent with dilute sulfuric acid of about 1 N or a dilute mixed acid aqueous solution consisting of sulfuric acid and hydrofluoric acid, whereby niobium in the organic solvent is preferentially transferred to the acidic aqueous solution by back extraction.

When further purification is desired, the acidic aqueous solution containing niobium as a main component is brought into contact with a fresh organic solvent comprising an aliphatic ketone, whereby tantalum in the acidic aqueous solution which has been back-extracted a an inevitable concomitant of niobium is re-extracted to obtain niobium of higher purity. On the other hand, the organic solvent predominantly containing tantalum is subjected to a second back extraction with a dilute mixed acid aqueous solution of sulfuric acid and hydrofluoric acid to remove the remaining trace of niobium. Each of the tantalum in the organic solvent and the niobium in the acidic aqueous solution is hydrolyzed with ammonia water so as to recover tantalum hydroxide and niobium hydroxide, respectively, each of which is then calcined at a temperature of about 900°C to obtain tantalum pentoxide and niobium pentoxide, respectively.

It has also been proposed that the above-described acidic aqueous solution containing tantalum and niobium is contacted with an organic solvent, e.g., amines and tributyl phosphate, etc., to extract tantalum and niobium into the organic solvent, and the extract is then contacted with nitric acid to selectively extract niobium into nitric acid.

According to these solvent extraction techniques, however, selective back extraction of niobium from the organic solvent containing tantalum and niobium into an aqueous solution is unavoidably accompanied by back extraction of tantalum into the aqueous solution in a proportion of from 5 to 15% by weight of the total tantalum due to weak retention of tantalum in the organic solvent. Further, when the organic solvent is subjected to second back extraction to completely remove a trace amount of niobium contained therein, back extraction of tantalum similarly takes place. Therefore, the recoveries of tantalum in the extraction and purification steps become low. Moreover, the resulting tantalum pentoxide obtained with a sacrifice of recovery of tantalum still contains several hundred ppm of niobium and several ten ppm of other impurities due to a small difference in affinity

with the organic solvent between tantalum and niobium or other impurities.

With respect to niobium, in order to increase the purity of niobium, it is necessary that the tantalum in the acidic aqueous solution predominantly containing niobium should be removed therefrom. However, the tantalum cannot be completely removed even by re-extraction with a fresh organic solvent because of too a small difference in extraction selectivity between tantalum and niobium so that the resulting niobium pentoxide still contains several percents of tantalum. In addition, various impurities are concentrated and remain therein, whereby the obtained niobium pentoxide has a purity of about two nines (99%) at the highest.

The object of this invention is to provide a method for effectively obtaining highly pure niobium and tantalum from an inexpensive crude material containing tantalum, niobium and impurities.

Another object of this invention is to provide a method for obtaining a high-purity tantalum compound containing substantially no impurities such as alkali metals, silicon, aluminum, transition elements and niobium, and a high-purity niobium compound containing substantially no impurities such as alkali metals, silicon, aluminum, transition elements and tantalum.

To meet these objects, it has now been found that when a compound containing tantalum, niobium and impurities is dissolved in hydrofluoric acid or an acid containing hydrofluoric acid to form an acidic aqueous solution having a hydrofluoric acid concentration of not more than 4 N and the resulting acidic aqueous solution is brought into contact with a sparingly water-soluble organic solvent containing from 1.0 to 1.2 equivalents, based on the tantalum contained in the acidic aqueous solution, of a sparingly water-soluble quaternary ammonium compound, tantalum can be extracted into the organic solution highly selectively and stoichiometrically. It has further been found that when the acidic aqueous solution containing niobium which is left after the extraction of tantalum is adjusted to have a hydrofluoric acid concentration of from 0.5 to 5 N and then contacted with a sparingly water-soluble organic solvent containing from 1.0 to 2.0 equivalents, based on the niobium contained in the acidic aqueous solution, of a sparingly water-soluble quaternary ammonium compound, niobium can be effectively extracted into the organic solution. It has furthermore been found that the affinity of the sparingly water-soluble quaternary ammonium compound in the above-described organic solution for tantalum or niobium is much higher than that for the other impurities which were extracted concomitantly. Therefore, when the organic solution containing tantalum or niobium is brought into contact with an aqueous washing solution containing at least one inorganic acid and/or ammonium salt, the impurities in the organic solution are transferred into the washing solution almost completely without accompanying substantial extraction of tantalum or niobium into the organic solution.

The present invention thus relates to a method for obtaining high-purity tantalum and high-purity niobium comprising the steps of:

(a) dissolving a crude compound containing tantalum and niobium in hydrofluoric acid or an inorganic acid containing hydrofluoric acid, adjusting the resulting acidic aqueous solution so as to have a hydrofluoric acid concentration of not higher than 4 N, and contacting the acidic aqueous solution with a sparingly water-soluble organic solvent containing from 1.0 to 1.2 equivalents of a sparingly water-soluble quaternary ammonium compound per equivalent of the tantalum contained in the acidic aqueous solution, to thereby selctively extract tantalum in the acidic aqueous solution into the organic solution;

(b) adjusting the hydrofluoric acid concentration of the niobium-containing acidic aqueous solution resulting from the step (a) to a range of from 0.5 to 5 N and contacting the acidic aqueous solution which a sparingly water-soluble organic solvent containing from 1.0 to 2.0 equivalents of a sparingly water-soluble quaternary ammonium compound per equivalent of the niobium contained in the acidic aqueous solution, to thereby extract the niobium in the acidic aqueous solution into the organic solution;

(c) contacting the tantalum-containing organic solution obtained in the step (a) with an aqueous solution containing at least one compound selected from the group consisting of inorganic acids and ammonium salts, to thereby remove impurities that have been extracted concomitantly into the organic solution; and

(d) contacting the niobium-containing organic solution obtained in the step (b) with an aqueous solution containing hydrofluoric acid or an aqueous solution containing hydrofluoric acid and at least one compound selected from the group consisting of inorganic acids and ammonium salts, to thereby remove impurities that have been extracted concomitantly into the organic solution.

Use of a sparingly water-soluble quaternary ammonium compound in the separation and purification of tantalum and niobium has never been previously proposed and the present inventin provides the first method of obtaining tantalum pentoxide and niobium pentoxide having purities reaching the orders of five to sixe nines (99.999 to 99.9999%) on an industrial scale.

The crude material containing tantalum and niobium which can be subjected to the method according to the present invention suitably includes ores, e.g., tantalite, columbite or fergusonite, scraps containing tantalum and niobium; tantalum-containing tin slags; shavings of single-crystal compounds, e.g., lithium tantalate or lithium niobate, impurity-containing tantalum or niobium compounds such as crude tantalum pentoxide, niobium

pentoxide, tantalum hydroxide or niobium hydroxide and mixtures thereof.

In the step (a), the crude material is dissolved in hydrofluoric acid or, if necessary, a mixed acid comprising hydrofluoric acid and an inorganic acid, e.g., hydrochloric acid, nitric acid or sulfuric acid. The acidic aqueous solution is diluted with water so as to have a hydrofluoric acid concentration of not more than 4 N, preferably not more than 2 N, and more preferably not more than 1 N.

It is known that tantalum, niobium and impurity elements originated in the crude material are present in the acidic aqueous solution thus prepared in different forms depending on the type of element. That is, alkali metals, e.g., lithium, sodium or potassium, alkaline earth metals, e.g., calcium or magnesium, and elements such as cobalt, manganese, iron, nickel or copper, are present as cations; elements such as aluminum, titanium, silicon or tin, are partly present in the form of a fluorine complex, e. g., heptafluorotantalic acid ($H_2TaF_7$) or oxopentafluoroniobic acid ($H_2NbOF_5$), respectively.

The present invention makes the most of differences in the form in which the above-described impurity elements are present, difference in the form between the tantalum-fluorine complex anion and the niobium-fluorine complex anion, and differences between the affinity of a quaternary ammonium compound with various fluorine complex anions and that with cations. If the tantalum and niobium-containing acidic aqueous solution has a hydrofluoric acid concentration of 4 N or more, the difference between the affinity of a quaternary ammonium compound with the tantalum-fluorine complex anion and that with the niobium-fluorine complex anion becomes small, resulting in reduction of selectivity to tantalum in the tantalum extraction.

Separately, an organic solution containing a sparingly water-soluble quaternary ammonium compound is prepared. The sparingly water-soluble quaternary ammonium compound to be used in this invention is represented by the formula:

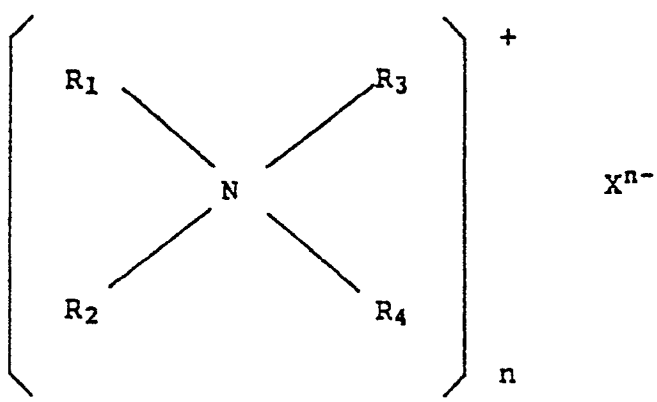

wherein $R_1$, $R_2$, $R_3$ and $R_4$ each represents an alkyl or aralkyl group, with the total number of carbon atoms in $R_1$, $R_2$, $R_3$ and $R_4$ being from 20 to 30; X represents a halogen atom, a hydroxyl group, a nitrate group, a carbonate group or a sulfate group; and n represents 1 or 2. The presence of a non-polar hydrocarbon group renders this quaternary ammonium compound soluble in organic solvents but sparingly soluble in water or acidic or basic aqueous solutions. The term "sparingly water-soluble" is used herein to include "water-insoluble ".

Specific examples of the sparingly water-soluble quaternary ammonium compound include tri-n-octylmethyl-ammonium chloride, tetra-n-hexylammonium iodide, cetyl-benzyldimethylammonium chloride, tri-n-octylmethylammonium hydroxide, bis-(tetra-n-hexylammonium sulfate), tri-n-octyl-methylammonium nitrate and bis-(tri-n-octylmethylammonium carbonate).

The sparingly water-soluble organic solvent in which the sparingly water-soluble quaternary ammonium compound is dissolved has low polarity and is capable of causing phase separation from water. Illustrative examples of such a solvent are aromatic hydrocarbons, e.g ., benzene, toluene, xylene or ethylbenzene aliphatic hydrocarbons, e.g., hexane, heptane, cyclo-hexane or kerosene, etc.; alcohols, e.g., isoamyl alcohol, octanol or tridecyl alcohol; ketones, e.g., methyl ethyl ketone or methyl isobutyl ketone; halogenated hydrocarbons, e.g., chloroform, carbon tetrachloride or di-chloroethane; ethers, e.g., diethyl ether or dipropyl ether; and mixtures thereof.

The amount of the sparingly water-soluble quaternary ammonium compound to be dissolved in the organic solvent ranges from 1.0 to 1.2 equivalents, preferably from 1.05 to 1.15 equivalents, based on tantalum present in the acidic aqueous solution in the form of a complex with fluorine. The extraction mechanism of the tantalum-fluorine complex as well as the niobium-fluorine complex with the quaternary ammonium compound has not yet been theoretically elucidated, but from the fact that each of them can be extracted substantially completely by the use of the quaternary ammonium compound in an amount equivalent to the tantalum or niobium, it is

assumed that the tantalum or niobium-fluorine complex would be extracted through the following reaction scheme:

| (aqueous phase) | | (organic phase) | | (aqueous phase) | | (organic phase) |
|---|---|---|---|---|---|---|
| $H_2TaF_7$ | + | $R_4NX$ | $\longrightarrow$ | $HX$ | + | $R_4NHTaF_7$ |
| $H_2NbOF_5$ | + | $R_4NX$ | $\longrightarrow$ | $HX$ | + | $R_4NHNbOF_7$ |

If the amount of the quaternary ammonium compound in the organic solution is less than the equivalent to tantalum in the acidic aqueous solution, tantalum in the acidic aqueous solution is not extracted completely and partly remains in the acidic aqueous solution. The remaining tantalum will be concomitantly extracted in the extraction of niobium, and such cannot be removed by the subsequent washing, resulting in contamination of niobium. On the other hand, if the quaternary ammonium compound is used in an amount exceeding 1.2 equivalents based on tantalum, the amount of niobium concomitantly extracted into the organic solution unfavorably increases. When the tantalum-containing organic solution is washed to remove impurities, the niobium concomitantly extracted into the organic solution is also transferred to the washing together with the impurities, thus leading to reduction in recovery of niobium.

In the step (a), the acidic aqueous solution containing tantalum and niobium in the form of a complex with fluorine is then mixed with the organic solution comprising a sparingly water-soluble quaternary ammonium compound and a sparingly water-soluble organic solvent by means of known fluid contact apparatus such as a batch system mixing-extraction equipment, a mixer-settler liquid-liquid extraction equipment, a pulse column liquid-liquid countercurrent extraction equipment, etc.

As a result of this liquid phase contact, the whole amount of tantalum in the acidic aqueous solution is extracted with high selectivity into the organic solution so as to provide an organic extract containing tantalum and a small amount of niobium in conformity to the excess of the quaternary ammonium compound, while leaving a niobium-containing acidic aqueous solution substantially free from tantalum.

In the step (b), the acidic aqueous solution which contains niobium in the form of a complex with fluorile and is substantially freed of tantalum is adjusted to have a hydrofluoric acid concentration of from 0.5 to 5 N and preferably from 1 to 3 N. When the hydrofluoric acid concentration is less than 0.5 N, the subsequent extraction of niobium by using a quaternary ammonium compound becomes insufficient, resulting in reduced yield of niobium. If it exceeds 5 N, no further improvement in niobium extractability is obtained.

Separately, an organic solution comprising a sparingly water-soluble organic solvent and from 1.0 to 2.0 equivalents and preferably from 1.05 to 1.50 equivalents of the aforesaid sparingly water-soluble quaternary ammonium compound per equivalent of niobium contained in the acidic aqueous solution is prepared. If the amount of the quaternary ammonium compound is less than the equivalent based on niobium, complete extraction of niobium cannot be achieved, causing reduction in yield of niobium. Even if it exceeds 2.0 equivalents based on niobium, no further improvement in niobium extractability is obtained.

The above prepared niobium-containing acidic aqueous solution and the quaternary ammonium compound-containing organic solution are then mixed by means of known fluid contact apparatus such as a batch system mixing-extraction equipment, a mixer-settler liquid-liquid extraction equipment or a pulse column liquid-liquid countercurrent extraction equipment.

As a result of this liquid phase contact, almost the whole amount of niobium present in the acidic aqueous solution is extracted into the organic solution to obtain a niobium-containing organic solution substantially free from tantalum.

In the steps (c) and (d), each of the organic solution containing tantalum and a small amount of niobium obtained in the step (a) or the organic solution containing niobium but containing substantially no tantalum obtained in the step (b) is mixed with an aqueous washing solution by means of known fluid contact apparatus, whereby impurities which have been extracted into the respective organic solutions together with tantalum or niobium are removed.

The aqueous washing solution to be used in the step (c) for washing the organic solution containing tantalum and a small amount of niobium contains at least one inorganic acid and/or ammonium salt. Specific examples of such washing solution are an aqueous solution containing at least one inorganic acid such as hydrochloric acid, nitric acid or sulfuric acid and ammonium salt such as ammonium fluoride, ammonium chloride, ammonium nitrate, or ammonium sulfate, and optionally also hydrofluoric acid.

The total concentration of the inorganic acids excluding hydrofluoric acid, if any, and ammonium salts in the aqueous washing solution ranges from 05 to 8.0 mol/ℓ and preferably from 2 to 4 mol/ℓ. If the total concentration of the inorganic acids and ammonium salts is less than 0.5 mol/ℓ, rapid removal of the niobium and impurities from the tantalum-containing organic solution will not occur. No significant improvement in the removal can be produced by increasing the total concentration over 8.0 mol/ℓ. The concentration of hydrofluoric acid, if used, is not more than 3 N and preferably not more than 1 N. If it exceeds 3 N, rapid removal of niobium and impurities cannot be ensured.

While the tantalum-containing organic solution is mixed with the aqueous washing solution, tantalum is strongly retained within the organic solution and will not be lost by extraction into the aqueous washing solution. On the other hand, niobium and the impurities present in the organic solution are transferred into the aqueous washing solution almost completely. Therefore, the resulting organic solution contains tantalum at a very high purity and not more than a few ppm of niobium and impurities based on tantalum.

The aqueous washing solution to be used in the step (d) for washing the organic solution containing niobium but no substantial tantalum contains at least hydrofluoric acid and may further contain at least one inorganic acid and/or ammonium salt. Specific examples of the aqueous washing solution are an aqueous solution of hydrofluoric acid alone; and an aqueous solution containing hydrofluoric acid and at least one inorganic acid, e.g., hydrochloric acid, nitric acid or sulfuric acid, and/or ammonium salt, e.g., ammonium fluoride, ammonium chloride, ammonium nitrate or ammonium sulfate.

The concentration of hydrofluoric acid contained in the aqueous washing solution to be used in the step (d) is at least 0.5 mol/ℓ and preferably at least 1 mol/ℓ. If it is less than 0.5 mol/ℓ, the amount of niobium shifted to the aqueous washing solution increases to cause reduction in yield of niobium.

The total concentration of the inorganic acids excluding hydrofluoric acid and ammonium salts in the aqueous washing solution to be used in the step (d) is not more than 4 mol/ℓ and preferably not more than 2 mol/ℓ. If it exceeds 4 mol/ℓ, the amount of niobium transferred to the aqueous washing solution increases, to cause reduction in yield of niobium.

Each of the organic solution containing tantalum only and the organic solution containing niobium only may be contacted with an aqueous solution containing ammonia water in a usual manner to hydrolyze the tantalum-fluorine complex or niobium-fluorine complex to precipitate tantalum hydroxide or niobium hydroxide, respectively, which is then dried, calcined at about 900°C, and dehydrated to obtain high-purity tantalum pentoxide or high-purity niobium pentoxide, respectively.

According to the method of the present invention, high-purity tantalum pentoxide containing not more than several ppm of impurities, e.g., niobium, alkali metals, iron, manganese, silicon, aluminum, transition elements, etc., can be obtained from a crude compound in a yield of about 98%. Likewise, high-purity niobium pentoxide containing not more than 10 ppm of tantalum and not more than several ppm of other impurities, e.g., alkali metals, iron, manganese, silicon, aluminum, transition elements, etc., can be obtained from a crude compound in a yield of about 95%.

The organic solution containing the quaternary ammonium compound from which tantalum or niobium has been separated by hydrolysis can be recycled for reuse without loss, either directly or after treatment with hydrochloric acid, nitric acid, sulfuric acid, etc.

The present inventiion will now be illustrated in greater detail with reference to the following examples, wherein percentages are by weight.

EXAMPLE 1

An ore containing 41.1% tantalum pentoxide, 26.7% niobium pentoxide, 11.1% iron oxide, 7.6% manganese dioxide, 3.8% titanium oxide, 1.7% aluminum oxide, 0.3% tin oxide, and traces of calcium, sodium, potassium, zinc, antimony, copper and lead was dissolved in a mixed acid of hydrofluoric acid and sulfuric acid. After removing any insoluble matter by filtration, the filtrate was diluted with pure water to prepare 8 ℓ of an acidic aqueous solution containing 33.7 g/ℓ of tantalum, 18.7 g/ℓ of niobium, 0.6 mol/ℓ of hydrofluoric acid, and 1 mol/ℓ of sulfuric acid.

Tri-n-octylmethylammonium chloride as a sparingly water-soluble quaternary ammonium compound was dissolved in toluene as a sparingly water-soluble organic solvent to prepare 8.8 ℓ of a toluene solution (organic solution) containing 75.2 g/ℓ of tri-n-octylmethylammonium chloride.

In a 20 ℓ-volume extraction vessel equipped with a stirrer were placed 8 ℓ of the above-prepared acidic

aqueous solution containing tantalum and niobium and 8 ℓ of the organic solution containing the quaternary ammonium compound, followed by stirring for about 1 hour. The resulting mixture was allowed to stand to thereby extract tantalum into the organic solution. To the resulting acidic aqueous solution was added the rest of the quaternary ammonium compound-containing organic solution as above prepared (0.8 ℓ), and the mixture was stirred, followed by standing in the same manner as above. The resulting organic solution was combined with the former organic solution. As a result, the combined organic phase extract was found to contain approximately 100% of tantalum present in the ore, 2.0 g/l of niobium and trace amounts of other impurities. On the other hand, no substantial tantalum was detected from the remaining niobium-containing acidic aqueous solution.

Hydrofluoric acid was added to the acidic aqueous solution containing niobium but no substantial tantalum to adjust the hydrofluoric acid concentration to about 2.5 N. Separately, 9 ℓ of a toluene solution containing 75,2 g/l of tri-n-octylmethylammonium chloride was prepared. Both the solutions were placed in a 20 ℓ-volume extraction vessel equipped with a stirrer, and the mixture was stirred for about 1 hour, followed by allowing to stand to thereby extract niobium into the organic solution. The extractability of niobium into the organic solution was approximately 100%.

The above obtained organic solution into which the whole amount of tantalum and a small amount of niobium had been extracted was washed twice with 8 ℓ portions of an aqueous washing solution containing 3 N of nitric acid and 0.1 N of hydrofluoric acid. By this procedure, the impurities concomitantly extracted, e.g., niobium, were transferred to the acidic aqueous solution. This procedure was repeated twice whereby the impurities present in the organic solution were removed. Thus, almost all of niobium and traces of other impurities were transferred into the washings by back extraction with little loss of tantalum.

On the other hand, the organic solution into which niobium had been extracted was washed twice with 9 ℓ portions of an aqueous washing solution containing 3 N of hydrofluoric acid to transfer the impurities concomitantly extracted into the washings. The loss of niobium was very small.

To the tantalum-containing organic solution after washing was added ammonia water to a pH of 8 to 9 to hydrolyze tantalum. The precipitate of tantalum hydroxide was collected by filtration, washed with pure water, dried, and calcined at 900°C for 4 hours to obtain purified tantalum pentoxide. The niobium-containing organic solution after washing was treated in the same manner as above to obtain purfied niobium pentoxide. The yields and impurity contents of the resulting products are shown in Table 1 below.

TABLE 1

| Product | Impurity (ppm) | | | | | | | | | | | Yield (%) |
|---|---|---|---|---|---|---|---|---|---|---|---|---|
| | Ta | Nb | Fe | Mn | Ti | Al | Sn | Si | Ca | Na | Sb | |
| Tantalum pentoxide | main | 0.5> | 0.5> | 0.5> | 0.5> | 0.2 | 0.5> | 1.0 | 0.4 | 0.1> | 0.5> | 98.3 |
| Niobium pentoxide | 5.1 | main | 1.6 | 0.5> | 0.5> | 0.8 | 0.5> | 0.8 | 0.5 | 0.2 | 0.6 | 86.7 |

EXAMPLE 2

An ore containing, as main components, 41.3% tantalum pentoxide, 20.0% niobium pentoxide, 13.9% iron oxide, 5.0% manganese dioxide, 4.1% tin oxide, and 2.6% titanium oxide was dissolved in a mixed acid of hydrofluoric acid and sulfuric acid. After removing any insoluble matter by filtration, the filtrate was diluted with pure water to prepare 20 ℓ of an acidic aqueous solution containing 56.0 g/l of tantalum, 23.3 g/l of niobium, 0.4 mol/ℓ of hydrofluoric acid, and 1 mol/ℓ of sulfuric acid.

Separately, using, as a sparingly water-soluble quaternary ammonium compound, tri-n-octylmethylammonium hydroxide and, as a sparingly water-soluble organic solvent, xylene, 20 ℓ of a xylene solution containing 121.8 g/l of tri-n-octylmethylammonium hydroxide was prepared.

Both the solutions were fed at a volumetric ratio of 1:1 in a 5-stage mixer-settler, wherein the two solutions were brought into countercurrent contact with each other to extract tantalum in the acidic aqueous solution into the organic solution. There were obtained 16.9 ℓ of an organic solution containing 58.1 g/ℓ of tantalum and 0.6 g/ℓ of niobium and 18.1 ℓ of an acidic aqueous solution containing 22.1 g/ℓ of niobium and no substantial tantalum.

To the acidic aqueous solution containing niobium but no substantial tantalum was added hydrofluoric acid to a concentration of 2 mol/ℓ. In a 5-stage mixer-settler were fed 19.2 ℓ of the acidic aqueous solution containing 20.8 g/ℓ of niobium and 19.2 ℓ of a xylene solution containing 121.8 g/ℓ of tri-n-octylmethylammonium hydroxide at a volumetric ratio of 1:1 so as to countercurrently contact with each other to extract niobium in the acidic aqueous solution into the organic solution. There was obtained 16 ℓ of an organic solution containing 21.6 g/ℓ of niobium.

On the other hand, the organic solution containing the extracted niobium was countercurrently contacted with the same volume of a mixed acid of 1 mol/ℓ of hydrofluoric acid and 1 mol/ℓ of sulfuric acid in a 5-stage mixersettler to thereby transfer trace amounts of impurities into the washing.

The above obtained organic solution containing tantalum and a small amount of niobium was countercurrently contacted with the same volume of an aqueous washing solution containing 3 mol/ℓ of hydrochloric acid and 0.1 mol/ℓ of hydrofluoric acid in a 5-stage mixer-settler to thereby transfer niobium and traces of other impurities into the washing.

Ammonia water was added to the tantalum-containing organic solution after washing to a pH of from 8 to 9 to hydrolyze tantalalum in the form of a complex with fluorine. The precipitate of tantalum hydroxide thus formed was collected by filtration, washed with pure water, dried, and then calcined at 900°C for 4 hours to obtain purified tantalum pentoxide. The niobium-containing organic solution after washing was similarly treated to obtain purified niobium pentoxide. The yields and impurity contents of the resulting products are shown in Table 2 below.

TABLE 2

| Product | Impurity (ppm) | | | | | | | | | | Yield (%) |
|---|---|---|---|---|---|---|---|---|---|---|---|
| | Ta | Nb | Fe | Mn | Ti | Al | Sn | Si | Ca | Na | |
| Tantalum pentoxide | main | 0.5> | 0.5> | 0.5> | 0.5> | 0.1 | 0.5> | 0.5> | 0.1 | 0.1> | 97.5 |
| Niobium pentoxide | 2.4 | main | 0.5> | 0.5> | 0.5> | 0.2 | 0.5> | 0.5> | 0.2 | 0.1> | 96.7 |

EXAMPLES 3 TO 5

Tantalum and niobium in an ore were separated and purified in the same manner as described in Example 2, except for using an organic solution and aqueous washing solutions having the compositions shown in Table 3.

The yields and impurity contents of the products are shown in Table 4.

**TABLE 3**

| Example No. | Organic Solution Comprising Sparingly Water-Soluble Quaternary Ammonium Compound and Sparingly Water-Soluble Organic Solvent | Aqueous Washing Solution: Ta-Containing Organic Solvent | Aqueous Washing Solution: Nb-Containing Organic Solvent |
|---|---|---|---|
| 3 | benzene solution containing 131.6 g/ℓ of bistri-n-octylmethylammonium sulfate | 3N $HNO_3$, 0.1N HF aq. solution | 2N HF aq. solution |
| 4 | chloroform solution containing 152.0 g/ℓ of tetra-n-hexylammonium iodide | 2N $HNO_3$ ammonium aq. solution | 1N HF, 1N HCl aq. solution |
| 5 | isoamyl alcohol solution containing 127.6 g/ℓ of tri-n-octylmethylammonium chloride | 2N $NH_4F$, 1N HF aq. solution | 3N HF, 0.5N $NH_4Cl$ aq. solution |

TABLE 4

| Example No. | Product | Impurity (ppm) Ta | Nb | Fe | Mn | Ti | Al | Sn | Si | Ca | Na | Yield (%) |
|---|---|---|---|---|---|---|---|---|---|---|---|---|
| 3 | Tantalum pentoxide | main | 0.5> | 0.5> | 0.5> | 0.5> | 0.1 | 0.5> | 0.7 | 0.1 | 0.2 | 98.5 |
| | Niobium pentoxide | 2.6 | main | 0.8 | 0.5> | 0.5> | 0.1 | 0.5> | 0.8 | 0.3 | 0.4 | 95.2 |
| 4 | Tantalum pentoxide | main | 0.8 | 0.5> | 0.5> | 0.5> | 0.1 | 0.5> | 1.0 | 0.5 | 0.4 | 98.8 |
| | Niobium pentoxide | 6.3 | main | 0.7 | 0.5> | 0.5> | 0.5 | 0.6 | 1.4 | 0.4 | 0.9 | 95.0 |
| 5 | Tantalum pentoxide | main | 2 | 0.6 | 0.5> | 0.5> | 1.5 | 0.7 | 1.7 | 1.3 | 1.5 | 97.6 |
| | Niobium pentoxide | 8.5 | main | 1.3 | 0.5> | 0.5> | 1.0 | 1.7 | 2.5 | 2.0 | 1.0 | 94.2 |

As described above, the method of the present invention has the following advantages.

(1) The method utilizes the great differences that exist between the tantalum-fluorine complex anions, niobium-fluorine complex anions, and impurities with respect to their affinity with the sparingly water-soluble quaternary ammonium compound. Therefore, the method is very effective for separation between tantalum and niobium and between tantalum or niobium and impurity elements, particularly, alkali metals, iron, silicon, aluminum, and other transition elements, to obtain a high-purity tantalum compound and a high-purity niobium compound, particularly tantalum pentoxide and niobium pentoxide.

(2) The method can be performed with one extraction step and one washing step for each of tantalum and niobium, using well-known simple extraction apparatus without involving complicated procedures (such as re-extraction, re-washing and the like), thus minimizing the cost incurred for apparatus and labor. Therefore, the method is very practical and economical for industrial production.

## Claims

1. A method for obtaining a high-purity tantalum compound and a high-purity niobium compound, comprising the steps of:

(a) dissolving a crude compound containing tantalum and niobium in hydrofluoric acid or an inorganic acid containing hydrofluoric acid, adjusting the resulting acidic aqueous solution so as to have a hydrofluoric acid concentration of not higher than 4 N, and contacting the acidic aqueous solution with a sparingly water-soluble organic solvent containing from 1.0 to 1.2 equivalents of a sparingly water-soluble quaternary ammonium compound per equivalent of the tantalum contained in the acidic aqueous solution, to thereby selectively extract tantalum in the acidic aqueous solution into the organic solution;

(b) adjusting the hydrofluoric acid concentration of the niobium-containing acidic aqueous solution resulting from step (a) to a range of from 0.5 to 5 N and contacting the acidic aqueous solution with a sparingly water-soluble organic solvent containing from 1.0 to 2.0 equivalents of a sparingly water-soluble quaternary ammonium compound per equivalent of the niobium contained in the acidic aqueous solution, to thereby extract the niobium in the acidic aqueous solution into the organic solution;

(c) contacting the tantalum-containing organic solution obtained in the step (a) with an aqueous solution containing at least one compound selected from inorganic acids and ammonium salts, to theteby remove impurities that have been extracted concomitantly into the organic solution; and

(d) a step of contacting the niobium-containing organic solution obtained in the step (b) with an aqueous solution containing hydrofluoric acid or an aqueous solution containing hydrofluoric acid and at least one compound selected from inorganic acids and ammonium salts, to thereby remove impurities that have been extracted concomitantly into the organic solution.

2. A method as claimed in Claim 1, wherein said sparingly water-soluble quaternary ammonium compound is represented by the formula:

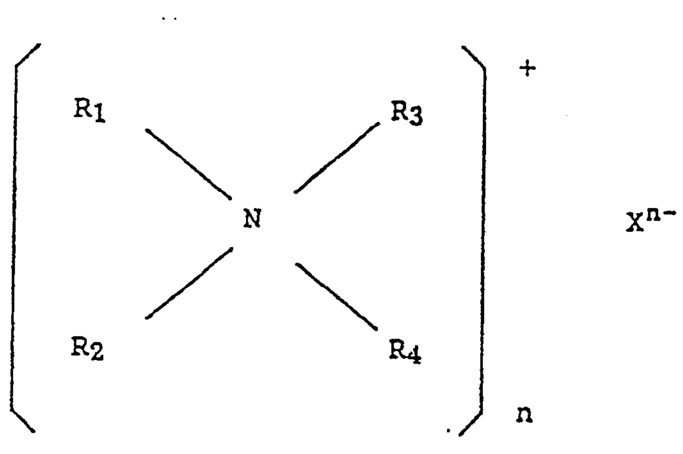

wherein $R_1$, $R_2$, $R_3$ and $R_4$ each represents an alkyl or aralkyl group, with the total number of carbon atoms in $R_1$, $R_2$, $R_3$ and $R_4$ being from 20 to 30; X represents a halogen atom, a hydroxyl group, a nitrate group, a carbonate group or a sulfate group; and n represents 1 or 2.

3. A method as claimed in claim 2, wherein said sparingly water-soluble quaternary ammonium compound is tri-n-octylmethylammonium chloride, tetra-n-hexyl-ammonium iodide, cetylbenzyldimethylammonium

chloride, tri-n-octylmethylammonium hydroxide, bis-(tetra-n-hexylammonium sulfate), tri-n-octylmethylammonium nitrate or bis-(tri-n-octylmethylammonium carbonate ).

4. A method as claimed in Claim 1, 2 or 3, wherein said sparingly water-soluble organic solvent for dissolving said sparingly water-soluble quaternary ammonium compound is an aromatic hydrocarbon selected from benzene, toluene, xylene and ethylbenzene; an aliphatic hydrocarbon selected from hexane, heptane, cyclohexane and kerosene; an ether selected from diethyl ether and dipropyl ether; an alcohol selected from isoamyl alcohol, octanol and tridecyl alcohol; a ketone selected from methyl ethyl ketone and methyl isobutyl ketone; a halogenated hydrocarbon selected from chloroform, carbon tetrachloride and dichloroethane; or a mixture thereof.

5. A method as claimed in Claim 1, 2, 3 or 4, wherein said crude material containing tantalum and niobium is an ore selected from tantalite, columbite and fergusonite; a scrap containing tantalum and niobium; a tantalum-containing tin slag; a shaving of a single-crystal compound selected from lithium tantalate and lithium niobate; crude tantalum pentoxide; crude niobium pentoxide; crude tantalum hydroxide; crude niobium hydroxide; or a mixture thereof.

6. A method as claimed in any preceding claim, wherein said acid in which said crude material containing tantalum and niobium is dissolved is hydrofluoric acid alone or in mixture with an acid selected from sulfuric acid, nitric acid and hydrochloric acid.

7. A method as claimed in any preceding claim, wherein said aqueous solution used in the step (c) is an aqueous solution containing at least one of hydrochloric acid, nitric acid, sulfuric acid, ammonium fluoride, ammonium chloride, ammonium nitrate and ammonium sulfate.

8. A method as claimed in any preceding claim, wherein said aqueous solution used in the step (c) contains hydrofluoric acid.

9. A method as claimed in any preceding claim, wherein said aqueous solution used in the step (d) contains hydrofluoric acid alone of together with at least one of hydrochloric acid, nitric acid, sulfuric acid, ammonium fluoride, ammonium chloride, ammonium nitrate and ammonium sulfate.

10. A method as claimed in any preceding claim, wherein said aqueous solution used in the step (a) contains not more than 2 N of hydrofluoric acid.

11. A method as claimed in Claim 10, wherein said aqueous solution used in the step (a) contains not more than 1 N of hydrochloric acid.

12. A method as claimed in any preceding claim, wherein in the step (b) the hydrofluoric acid concentration of the niobium-containing acidic aqueous solution is adjusted to a range of from 1 to 3 N.

**Patentansprüche**

1. Verfahren zur Gewinnung einer hochreinen Tantalverbindung und einer hochreinen Niobverbindung, umfassend die Schritte

(a) Auflösen einer Tantal und Niob enthaltenden Rohverbindung in Fluorwasserstoffsäure oder in einer Fluorwasserstoffsäure enthaltenden anorganischen Säure, Einstellen der erhaltenen sauren wäßrigen Lösung, so daß sie eine Fluorwasserstoffsäure-Konzentration von nicht höher als 4 n aufweist, und Zusammenbringen der sauren wäßrigen Lösung mit einem schwer wasserlöslichen organischen Lösungsmittel, das 1,0 bis 1,2 Äquivalente einer schwer wasserlöslichen quartären Ammoniumverbindung pro Äquivalent des in der sauren wäßrigen Lösung enthaltenen Tantals enthält, um dadurch selektiv Tantal aus der sauren wäßrigen Lösung in die organische Lösung zu extrahieren,

(b) Einstellen der Fluorwasserstoffsäure-Konzentration der in Schritt (a) erhaltenen, Niob enthaltenden sauren wäßrigen Lösung auf einen Bereich von 0,5 bis 5 n und Zusammenbringen der sauren wäßrigen Lösung mit einem schwer wasserlöslichen organischen Lösungsmittel, das 1,0 bis 2,0 Äquivalente einer schwer wasserlöslichen quartären Ammoniumverbindung pro Äquivalent des in der sauren wäßrigen Lösung enthaltenen Niobs enthält, um dadurch das Niob aus der sauren wäßrigen Lösung in die organische Lösung zu extrahieren;

(c) Zusammenbringen der in Schritt (a) erhaltenen Tantal enthaltenden organischen Lösung mit einer wäßrigen Lösung, die mindestens eine Verbindung ausgewählt aus anorganischen Säuren und Ammoniumsalzen enthält, um dadurch Verunreinigungen zu entfernen, die gleichzeitig in die organische Lösung extrahiert worden sind; und

(d) Zusammenbringen der in Schritt (b) erhaltenen Niob enthaltenden organischen Lösung mit einer Fluorwasserstoffsäure enthaltenden wäßrigen Lösung oder mit einer wäßrigen Lösung, die Fluorwasserstoffsäure und mindestens eine Verbindung ausgewählt aus anorganischen Säuren und Ammoniumsalzen enthält, um dadurch Verunreinigungen zu entfernen, die gleichzeitig in die organische Lösung extrahiert

worden sind.

2. Verfahren nach Anspruch 1, wobei die schwer wasserlösliche quartäre Ammoniumverbindung durch die Formel:

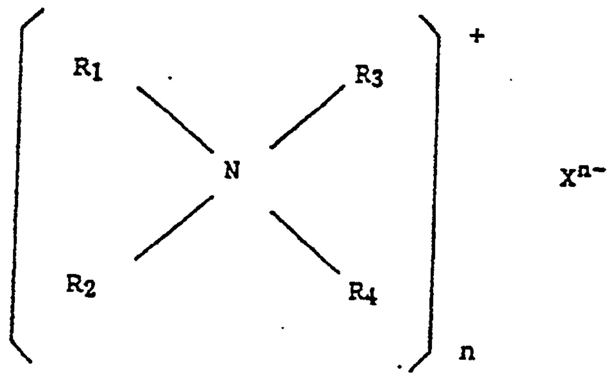

dargestellt ist, in der $R_1$, $R_2$, $R_3$ und $R_4$ jeweils einen Alkyl- oder Aralkylrest darstellen, wobei die Gesamtzahl der Kohlenstoffatome in $R_1$, $R_2$, $R_3$ und $R_4$ von 20 bis 30 beträgt; X ein Halogenatom, eine Hydroxylgruppe, eine Nitratgruppe, eine Carbonatgruppe oder eine Sulfatgruppe darstellt und n 1 oder 2 ist.

3. Verfahren nach Anspruch 2, wobei die schwer wasserlösliche quartäre Ammoniumverbindung Tri-n-octylmethylammoniumchlorid, Tetra-n-hexylammoniumjodid, Cetylbenzyldimethylammoniumchlorid, Tri-n-octylmethylammoniumhydroxid, Bis-(tetra-n-hexylammoniumsulfat), Tri-n-octylmethylammoniumnitrat oder Bis-(tri-n-octylmethylammoniumcarbonat) ist.

4. Verfahren nach Anspruch 1, 2 oder 3, wobei das schwer wasserlösliche organische Lösungsmittel für das Auflösen der schwer wasserlöslichen quartären Ammoniumverbindung ein aromatischer Kohlenwasserstoff ausgewählt aus Benzol, Toluol, Xylol und Ethylbenzol; ein aliphatischer Kohlenwasserstoff ausgewählt aus Hexan, Heptan, Cyclohexan und Kerosin; ein Ether ausgewählt aus Diethylether und Dipropylether; ein Alkohol ausgewählt aus Isoamylalkohol, Octanol und Tridecylalkohol; ein Keton ausgewählt aus Methylethylketon und Methylisobutylketon; ein halogenierter Kohlenwasserstoff ausgewählt aus Chloroform, Tetrachlorkohlenstoff und Dichlorethan; oder ein Gemisch davon ist.

5. Verfahren nach Anspruch 1, 2, 3 oder 4, wobei das Tantal und Niob enthaltende Rohmaterial ein Erz ausgewählt aus Tantalit, Columbit und Fergusonit; Tantal und Niob enthaltender Abfall; Tantal enthaltende Zinnschlacke; Span einer Einkristallverbindung, ausgewählt aus Lithiumtantalat und Lithiumniobat; rohes Tantalpentoxid; rohes Niobpentoxid; rohes Tantalhydroxid; rohes Niobhydroxid; oder ein Gemisch davon ist.

6. Verfahren nach einem der vorstehenden Ansprüche, wobei die Säure, in der das Tantal und Niob enthaltende Rohmaterial aufgelöst wird, Fluorwasserstoffsäure alleine oder im Gemisch mit einer Säure ausgewählt aus Schwefelsäure, Salpetersäure und Chlorwasserstoffsäure, ist.

7. Verfahren nach einem der vorstehenden Ansprüche, wobei die in Schritt (c) verwendete wäßrige Lösung eine wäßrige Lösung ist, die mindestens einen der Stoffe Chlorwasserstoffsäure, Salpetersäure, Schwefelsäure, Ammoniumfluoird, Ammoniumchlorid, Ammoniumnitrat und Ammoniumsulfat enthält.

8. Verfahren nach einem der vorstehenden Ansprüche, wobei die in Schritt (c) verwendete wäßrige Lösung Fluorwasserstoffsäure enthält.

9. Verfahren nach einem der vorstehenden Ansprüche, wobei die in Schritt (d) verwendete wäßrige Lösung Fluorwasserstoffsäure alleine oder zusammen mit mindestens einem der Stoffe Chlorwasserstoffsäure, Salpetersäure, Schwefelsäure, Ammoniumfluorid, Ammoniumchlorid, Ammoniumnitrat und Ammoniumsulfat enthält.

10. Verfahren nach einem der vorstehenden Ansprüche, wobei die in Schritt (a) verwendete wäßrige Lösung nicht mehr als 2 n Fluorwasserstoffsäure enthält.

11. Verfahren nach Anspruch 10, wobei die in Schritt (a) verwendete wäßrige Lösung nicht mehr als 1 n Chlorwasserstoffsäure enthält.

12. Verfahren nach einem der vorstehenden Ansprüche, wobei in Schritt (b) die Fluorwasserstoffsäure-Konzentration der Niob enthaltenden sauren wäßrigen Lösung auf einen Bereich von 1 bis 3 n eingestellt wird.

## Revendications

1. Procédé pour obtenir un composé de tantale de haute pureté et un composé de niobium de haute pureté, le procédé comprenant les étapes consistant :

(a) à dissoudre un composé brut, contenant du tantale et du niobium, dans de l'acide fluorhydrique ou dans un acide organique contenant de l'acide fluorhydrique, à ajuster la solution aqueuse acide résultante de façon à y avoir une concentration en acide fluorhydrique non supérieure à 4 N, et à mettre la solution aqueuse acide en contact avec un solvant organique peu soluble dans l'eau et contenant de 1,0 à 1,2 équivalent d'un composé d'ammonium quaternaire peu soluble dans l'eau, par équivalent du tantale contenu dans la solution aqueuse acide, afin de faire passer ainsi par extraction sélective le tantale de la solution aqueuse acide dans la solution organique ;

(b) à ajuster la concentration en l'acide fluorhydrique de la solution aqueuse d'acide contenant du niobium et provenant de l'étape (a) à une valeur comprise entre 0,5 et 5 N et à mettre la solution aqueuce acide en contact avec un solvant organique peu soluble dans l'eau et contenant de 1,0 à 2,0 équivalent d'un composé d'ammonium quaternaire, peu soluble dans l'eau, par équivalent du niobium contenu dans la solution aqueuse acide, de faire passer par extraction le niobium de la solution aqueuse acide dans la solution organique ;

(c) à mettre la solution organique contenant du tantale, obtenue à l'étape (a), en contact avec une solution aqueuse contenant au moins un composé choisi parmi des acides minéraux et des sets d'ammonium, afin d'enlever ainsi les impuretés qui sont passées simultanément par extraction dans la solution organique ; et

(d) à mettre la solution organique contenant le niobium, obtenue à l'étape (b), en contact avec une solution aqueuse contenant de l'acide fluorhydrique ou avec une solution aqueuse contenant de l'acide fluorhydrique et au moins un composé choisi parmi des acides minéraux et des sets d'ammonium, afin d'enlever les impuretés qui sont passées simultanément par extraction dans la solution organique.

2. Procédé tel que revendiqué à la revendication 1, dans lequel ledit composé d'ammonium quaternaire peu soluble dans l'eau est représenté par la formule :

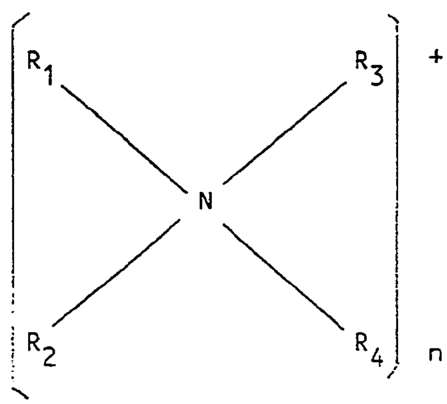

$X^{n-}$

dans laquelle les symboles $R_1$, $R_2$, $R_3$ et $R_4$ représentent chacun un groupe alkyle ou aralkyle, le nombre total des atomes de carbone présents dans les groupes $R_1$, $R_2$, $R_3$ et $R_4$ étant de 20 à 30 ; X représente un atome d'halogène, un groupe hydroxyle, un groupe nitrate, un groupe carbonate ou un groupe sulfate ; n vaut 1 ou 2.

3. Procédé tel que revendiqué à la revendication 2, dans lequel ledit composé d'ammonium peu soluble dans l'eau est le chlorure de tri-n-octylméthylammonium, l'iodure de tétra-n-hexyl-ammonium, le chlorure de cétylbenzyldiméthylammonium, l'hydroxyde de tri-n-octylméthylammonium, le sulfate de bis (tétra-n-hexyl-ammonium), le nitrate de tri-n-octylméthylammonium ou le carbonate de bis(tri-n-octylméthylammonium).

4. Procédé tel que revendiqué à la revendication 1, 2, ou 3, dans lequel le solvant organique peu soluble dans l'eau, destiné à dissoudre ledit composé d'ammonium quaternaire peu soluble dans l'eau, est un hydrocarbure aromatique choisi parmi le benzène, le toluène, le xylène et le méthylbenzène ; un hydrocarbure aliphatique choisi parmi l'hexane, l'heptane, le cyclohexane et le kérosène, un éther choisi parmi l'éther diéthylique et l'éther dipropylique ; un alcool choisi parmi l'alcool isoamytique, l'octanol et l'alcool tridécylique ; une cétone choisie parmi la méthyléthyl-cétone et la méthylisobutylcétone, un hydrocarbure halogéné choisi parmi le chloroforme, le tétrachlorure de carbone et le dichloro-éthane ; ou un de leurs mélanges.

5. Procédé tel que revendiqué à la revendication 1, 2, 3 ou 4, dans lequel ladite matière brute contenant

du tantale et du niobium est un minerai choisi parmi la tantalite, la colombite et la fergusonite ; un déchet contenant du tantale et du niobium ; un laitier d'étain contenant du tantale ; un copeau d'un composé monocristallin choisi parmi le tantalate de lithium et le niobate de lithium ; le pentoxyde de tantale brut ; le pentoxyde de niobium brut ; l'hydroxyde de tantale brut ; l'hydroxyde de niobium brut ou un de leurs mélanges.

6. Procédé tel que revendiqué dans l'une quelconque des revendications précédentes, dans lequel ledit acide, dans lequel ladite matière brute contenant du tantale et du niobium est dissoute, est l'acide fluorhydrique seul ou en mélange avec un acide choisi parmi l'acide sulfurique, l'acide nitrique et l'acide chlorhydrique.

7. Procédé tel que revendiqué dans l'une quelconque des revendications précédentes, dans lequel ladite solution aqueuse utilisée dans l'étape (c) est une solution aqueuse contenant au moins un composé choisi parmi l'acide chlorhydrique, l'acide nitrique, l'acide sulfurique, le fluorure d'ammonium, le chlorure d'ammonium, le nitrate d'ammonium et le sulfate d'ammonium.

8. Procédé tel que revendiqué dans l'une quelconque des revendications précédentes, dans lequel ladite solution aqueuse utilisée à l'étape (c) contient de l'acide fluorhydrique.

9. Procédé tel que revendiqué dans l'une quelconque des revendications précédentes, dans leque ladite solution aqueuse utilisée à l'étape (b) contient de l'acide fluorhydrique seul ou avec au moins un composé choisi parmi l'acide chlorhydrique, l'acide nitrique, l'acide sulfurique, le fluorure d'ammonium, le chlorure d'ammonium, le nitrate d'ammonium et le sulfate d'ammonium.

10. Procédé tel que revendiqué dans l'une quelconque des revendications précédentes, dans lequel ladite solution aqueuse utilisée à l'étape (a) ne contient pas plus de 2 N d'acide fluorhydrique.

11. Procédé tel que revendiqué à la revendication 10, dans lequel ladite solution aqueuse utilisée à l'étape (a) ne contient pas plus de 1 N d'acide chlorhydrique.

12. Procédé tel que revendiqué dans l'une quelconque des revendications précédentes, dans lequel dans l'étape (b), on ajuste à une valeur comprise entre 1 N et 3 N la concentration en acide fluorhydrique de la solution aqueuse acide contenant du niobium.